Europäisches Patentamt

European Patent Office

Office européen des brevets

(11) Veröffentlichungsnummer: **0 460 712 A2**

# (12) EUROPÄISCHE PATENTANMELDUNG

(21) Anmeldenummer: 91113399.9

(22) Anmeldetag: 18.08.87

(51) Int. Cl.⁵: B65H 45/103

Diese Anmeldung is am 09 - 08 - 1991 als Teilanmeldung zu der unter INID-Kode 60 erwähnten Anmeldung eingereicht worden.

(43) Veröffentlichungstag der Anmeldung:
**11.12.91 Patentblatt 91/50**

(60) Veröffentlichungsnummer der früheren Anmeldung nach Art. 76 EPÜ: **0 303 722**

(84) Benannte Vertragsstaaten:
**AT CH DE ES FR GB IT LI**

(71) Anmelder: **Krauss u. Reichert GmbH + Co.
KG Spezialmaschinenfabrik
Stuttgarter Strasse 68
W-7012 Fellbach(DE)**

(72) Erfinder: **Jung, Rolf
Im Sämann 14
W-7050 Waiblingen(DE)**
Erfinder: **Buss, Albert
Buchrainstrasse 4
W-7420 Münsingen(DE)**
Erfinder: **Breckel, Ulf
Neuffner Strasse 1
W-7441 Kohlberg(DE)**
Erfinder: **Buchmann, Winfried
Ludwig-Speidel-Strasse 65
W-7254 Hemmingen(DE)**

(74) Vertreter: **Hoeger, Stellrecht & Partner
Uhlandstrasse 14 c
W-7000 Stuttgart 1(DE)**

(54) **Verfahren und Vorrichtung zum Legen von fehlerbehafteten Stoffbahnen.**

(57) Um ein Verfahren zum Legen einer mit Marken gekennzeichnete Fehler aufweisenden Stoffbahn, bei welchem die jeweilige Marke durch ihre Bezeichnung erkannt, der dieser zukommende X-Wert in der ausgelegten Lage ermittelt und mindestens eine zu dieser Marke gespeicherte Positionsangabe einem Rechner zum Schnittbildvergleich zugeleitet wird, sowie eine Vorrichtung zum Auslegen einer Stoffbahn zu schaffen, bei denen ein Fehler lediglich einmal erfaßt werden muß und bei welchen im Rahmen des Auslegens der Stoffbahn eine möglichst stoffsparende Fehlerbehandlung ohne erneute Inspektion des Fehlers möglich ist, wird vorgeschlagen, daß nach dem Erkennen der Marke dem Rechner zu dem ermittelten X-Wert als weitere Positionsangaben auf die Marke und die Seitenkante bezogene X- bzw. Y-Werte einer eine Begrenzungslinie des Fehlers definierenden Punktschar übermittelt werden und daß aufgrund dieser Werte die Position der Begrenzungslinie in der ausgelegten Lage festgestellt und anschließend der Vergleich mit dem Schnittbild durchgeführt wird.

FIG.1

Die Erfindung betrifft ein Verfahren und eine Vorrichtung zum Auslegen einer Stoffbahn mit einem derart erfaßten Fehler.

Die Erfindung geht aus von einer Stoffbahn, welche einem Verfahren zum Erfassen eines Fehlers in dieser Stoffbahn im Rahmen einer Fehlerschau unterzogen wurde, bei welchem der Fehler dadurch registriert wird, daß dessen Position in X-Richtung durch eine auf der Warenbahn gesetzte Marke und mindestens eine weitere Positionsangabe zusammen mit einer Bezeichnung der Marke festgehalten wird.

Dies erfolgt vorzugsweise mit einer Warenschaumaschine zum Erfassen von Fehlern auf einer Stoffbahn, insbesondere zur Durchführung des vorstehend genannten Verfahrens, mit einer Warenschaufläche, mit einer Abwickeleinrichtung, mit einer Aufwickeleinrichtung und mit einer Registriereinrichtung für den Fehler, welche eine Rechnereinheit mit einem Datenspeicher sowie einer Eingabeeinrichtung für eine Bezeichnung von auf der Stoffbahn zur Kennzeichnung einer X-Position der Fehler gesetzten Marken und für mindestens eine weitere Positionsangabe aufweist.

Insbesondere betrifft die Erfindung ein Verfahren zum Legen einer mit Marken gekennzeichneten Fehler aufweisenden Stoffbahn, bei welchem jede Marke durch ihre Bezeichnung erkannt, der dieser zukommende X-Wert in der ausgelegten Lage ermittelt und mindestens eine zu dieser Marke gespeicherte Positionsangabe einem Rechner zum Schnittbildvergleich zugeleitet wird, wobei dieses Verfahren insbesondere als Ergänzung zu dem vorstehend beschriebenen Verfahren zum Erfassen eines Fehlers sowie der hierzu verwendeten Warenschaumaschine zu sehen ist.

Ferner betrifft die Erfindung eine Stofflegemaschine für eine mit Marken gekennzeichnete Fehler aufweisende Stoffbahn, insbesondere zur Durchführung des vorstehend beschriebenen Verfahrens zum Legen der Stoffbahn, mit einer Stoffvorgabe, mit einem eine Auslegekante aufweisenden Legeaggregat, mit einem Detektor für die Marken und mit einer Steuerung, umfassend ein Rechnersystem, welches so strukturiert ist, daß es die Marken aufgrund ihrer Bezeichnung erkennt und den der jeweiligen Marke entsprechenden X-Wert in der auszulegenden Lage ermittelt sowie aufgrund mindestens einer weiteren zu dieser Marke in einem Datenspeicher abgelegten Positionsangabe einen Schnittbildvergleich durchführt.

Aus der DE-OS 34 01 826 ist ein Verfahren und eine Vorrichtung bekannt, bei welchem der Fehler im Rahmen einer Warenschau durch ein direkt auf diesem aufgeklebtes Plättchen markiert wird. Beim anschließenden Legen der Stoffbahn wird dieses Plättchen dann an der Legemaschine durch einen Detektor erkannt und dann nochmals die genaue Lage des Fehlers relativ zum Schnittbild ermittelt, mit letzterem verglichen und das entsprechend der jeweiligen Fehlerlage erforderliche Fehlerbehandlungsverfahren eingeleitet.

Ferner ist aus einer Vortragszusammenfassung von Norman E.Witthauer aus den Conference Proceedings zu der Konferenz "Advanced Apparel-Cutting and Utlization Technology", "The Cutting Room of the Future" ein Verfahren und eine Vorrichtung zur Fehlererkennung bekannt, bei welchem der Fehler auf einer Warenschaumaschine festgestellt, seine X-Position, d.h. seine Position in Längsrichtung der Stoffbahn, mit einer auf die Stoffbahn aufgebrachten Marke gekennzeichnet sowie die Y-Position des Fehlers, d.h. sein Abstand zu einer Seiten- oder Längskante der Warenbahn als Bezugspunkt in einem Datenspeicher zusammen mit einer Bezeichnung der Marke entsprechend ihrer Reihenfolge auf der Stoffbahn abgelegt wird.

Beim anschließenden Legen der Stoffbahn werden dann die Marken von einem an der Legemaschine gehaltenen Detektor ihrer Reihenfolge nach erkannt, so daß aus den zusätzlich auf die Legemaschine überspielten Daten die zur jeweiligen Marke gehörige X/Y-Position des Fehlers entnommen werden kann und durch die mittels des Detektors festgestellte X-Position der Marke sowie die aus den Daten entnehmbare Y-Position des Fehlers dieser lokalisierbar ist. Nach dem Lokalisieren des Fehlers wird dann dessen Ausdehnung ermittelt, mit dem Schnittbild verglichen und dann festgestellt, ob der Fehler in einem späteren Zuschnitteil liegt oder nicht, so daß abhängig davon die weitere Vorgehensweise betreffend das Überlappendlegen bestimmt werden kann.

Dieses bekannte Verfahren hat den Nachteil, daß damit bei der Warenschau der Fehler zwar als solcher lokalisiert wird, daß diese Information jedoch nicht ausreicht, um beim Legen ohne nochmalige detaillierte Erfassung des Fehlers einen Schnittbildvergleich so zu führen, da die Position des Fehlers als solche für die Frage, welche Zuschnitteile durch den Fehler tangiert werden, keine ausreichende Information darstellt. Bei dem bekannten Verfahren wird also zusätzlich zur Warenschau der Fehler beim Auslegen nochmals genau erfaßt, so daß der Fehler als solcher zweimal inspiziert werden muß und außerdem ein automatisches Legen, das heutzutage mit großer Legegeschwindigkeit möglich wäre, aufgrund der Unterbrechungen durch die Fehlerinspektion nicht möglich ist.

Der Erfindung liegt daher die Aufgabe zugrunde, ein Verfahren und Vorrichtungen der gattungsgemäßen Art zu schaffen, bei denen ein Fehler lediglich einmal erfaßt werden muß und bei welchen im Rahmen des Auslegens der Stoffbahn eine möglichst stoffsparende Fehlerbehandlung ohne erneute Inspektion des Fehlers möglich ist.

Die erfindungsgemäße Aufgabe bei einem Verfahren zum Legen einer mit Marken gekennzeichneten, Fehler aufweisenden Stoffbahn der eingangs beschriebenen Art wird erfindungsgemäß dadurch gelöst, daß nach dem Erkennen der Marke dem Rechner zu dem ermittelten X-Wert als weitere Positionsangaben gespeicherte, auf die Marke und die Seitenkante bezogene X- bzw. Y-Werte einer eine Begrenzungslinie des Fehlers definierenden Punktschar übermittelt werden und daß aufgrund dieser Werte die Position der Begrenzungslinie in der ausgelegten Lage festgestellt und anschließend der Vergleich mit dem Schnittbild durchgeführt wird.

Dieses erfindungsgemäße Verfahren hat nun in Ergänzung zu dem nachstehend beschriebenen Verfahren zum Erfassen des Fehlers den Vorteil, daß es vollautomatisiert, beispielsweise entsprechend der deutschen Patentanmeldung P 37 13 010.2, auf welche vollinhaltlich Bezug genommen wird, durchgeführt werden kann, da der Fehler durch die Begrenzungslinie eindeutig und hinreichend definiert ist und keine weitere Information mehr zum Schnittbildvergleich benötigt wird. Außerdem ist die Begrenzungslinie durch den Bezug zur Position der Marke in X-Richtung unabhängig von einem Verzug der Stoffbahn eindeutig definiert, so daß auch diesbezüglich keine Fehler mehr auftreten können.

Im Rahmen der erfindungsgemäßen Lösung sind zur Ermittlung des X-Wertes der Marke in bezug auf einen Anfang der jeweils ausgelegten Lage zwei unterschiedliche Ausführungsformen des Verfahrens denkbar.

Bei der ersten Ausführungsform wird zur Ermittlung des X-Wertes die Marke dann detektiert, wenn sie in der ausgelegten Stofflage erkennbar ist. In diesem Fall ist dadurch, daß die jeweilige Strecke bereits abgefahren wurde, eindeutig feststellbar, welcher X-Wert dieser Marke zukommt.

Bei der anderen Ausführungsform des erfindungsgemäßen Verfahrens ist vorgesehen, daß zur Ermittlung des X-Wertes der Marke diese auf der Stoffbahn zwischen einer Stoffrolle und einer Auslegekante detektiert und eine Länge eines zwischen dem Detektieren der Marke und der Auslegekante liegenden Stücks der Stoffbahn festgestellt und jeweils hinzuaddiert wird. Letzteres Verfahren hat den Vorteil, daß der Detektor für die Marke im Bereich des durch die Legemaschine geführten Stoffbahnstücks angeordnet werden kann, allerdings den Nachteil, daß dann das Stoffbahnstück zwischen dem Detektor und der Auslegekante exakt bestimmbar sein muß.

Um insbesondere ein Bremsen des Legewagens rechtzeitig einleiten zu können, ist es vorteilhaft, wenn die Marke in einem der Stoffrolle zugewandten Stück der Stoffbahn bezüglich ihrer Reihenfolge detektiert wird. Dieses Verfahren hat außerdem den Vorteil, daß bis zum endgültigen Festlegen der X-Position der Marke bereits der Datenspeicher nach den entsprechend der Reihenfolge der Marke abgelegten X/Y-Werten der die Begrenzungslinie des Fehlers definierenden Punktschar suchen kann, so daß diese Werte bereits bei Ermittlung des X-Wertes der Marke bereitstehen.

Noch vorteilhafter ist es jedoch, wenn die Marke durch einen auf diese aufgebrachten maschinenlesbaren Erkennungscode erkannt wird, wobei es, um das Auslegen möglichst nicht zu behindern, vorteilhaft ist, wenn der Erkennungscode bei voller Legegeschwindigkeit gelesen wird.

Die Bestimmung der genauen X-Position der Marke bei voller Legegeschwindigkeit führt jedoch zu einer gewissen Ungenauigkeit bei der Ermittlung des X-Wertes, so daß es im Rahmen einer möglichst genauen Bestimmung des X-Wertes vorteilhaft ist, wenn die Erfassung der Marke als Bezugspunkt in X-Richtung bei reduzierter Legegeschwindigkeit erfolgt.

Insbesondere bei der ersten Ausführungsform des erfindungsgemäßen Verfahrens, bei welcher die Bestimmung des X-Wertes der Marke erst dann erfolgt, wenn diese in der ausgelegten Stofflage erkennbar ist, ist es, um das Legeverfahren möglichst schnell durchführen zu können, von Vorteil, wenn das Erkennen der Marke vor der Erfassung der Marke als Bezugspunkt in X-Richtung erfolgt, so daß nach dem Erkennen bereits der Bremsvorgang und die Datensuche eingeleitet werden können.

Sofern die Marke selbst mit einem Bezugspunkt versehen ist, wird, wie bereits im Zusammenhang mit dem Verfahren zum Erfassen eines Fehlers dargestellt wurde, eine erhöhte Genauigkeit dann erreicht, wenn beim Legen der auf der Marke aufgebrachte Bezugspunkt erfaßt wird. Eine Verwechslung des Bezugspunktes mit dem Erkennungscode, beispielsweise bei einer seitlichen Verschiebung der Stoffbahn, ist dann ausgeschlossen, wenn die Erfassung des Bezugspunktes auf der Marke durch Lesen eines vorgeschalteten Indentifizierungscodes erfolgt.

Ergänzend zum vorstehenden Verfahren zum Legen der Stoffbahn wird die Aufgabe bei einer Stofflegemaschine für eine mit Marken gekennzeichnete Fehler aufweisende Stoffbahn der eingangs beschriebenen Art erfindungsgemäß dadurch gelöst, daß das Rechnersystem einen Datenspeicher für auf die Marke und die Seitenkante bezogene X- bzw. Y-Werte einer eine Begrenzungslinie des Fehlers definierenden Punktschar aufweist und so strukturiert ist, daß zu dem X-Wert der Marke auf der auszulegenden Lage als weitere Positionsangabe die X- und Y-Werte der Punktschar zur Ermittlung der Position der Begrenzungslinie in der auszulegenden Lage zur Durchführung des Schnittbildvergleichs herangezogen werden.

Mit einer derartigen Stofflegemaschine ist somit im Sinne der erfindungsgemäßen Aufgabe ein Legen der Stoffbahn ohne erneute Inspektion des Fehlers, beispielsweise vollautomatisch, durchführbar.

Das beschriebene Ausführungsbeispiel der erfindungsgemäßen Legemaschine ist hinsichtlich der Anordnung des Detektors nicht festgelegt. So ist es vorteilhaft, wenn ein erster Detektor zum Erkennen der Marke im Bereich der Stoffvorgabe angeordnet ist, um möglichst vor dem Auslegen des Fehlers den Legevorgang abbremsen und die zu dieser Marke entsprechenden Daten im Datenspeicher auffinden zu können.

Da in der Regel bei voller Legegeschwindigkeit eine exakte Erkennung der X-Position der Marke auf der auszulegenden Lage nicht möglich ist, ist es zweckmäßig, wenn ein zweiter Detektor im Bereich der Auslegekante angeordnet ist.

Da der Bremsvorgang beim Auftreten einer jeden Marke derselbe ist, hat es sich als nützlich erwiesen, wenn die Steuerung eine durch den zweiten Detektor auslösbare Bremsablaufsteuerung aufweist.

Um in dem Fall, in dem die Marke einen Erkennungscode aufweist, diesen möglichst frühzeitig lesen zu können, ist vorgesehen, daß der erste Detektor zum Lesen eines auf der Marke aufgebrachten Erkennungscodes ausgebildet ist.

In Abwandlung zu dem vorstehenden Ausführungsbeispiel, bei welchem die X-Position der Marke bezüglich des Anfangs der auszulegenden Lage durch den zweiten, nahe der Auslegekante angeordneten Detektor festgestellt wird, ist es möglich, bei der erfindungsgemäßen Stofflegemaschine mit dem ersten Detektor dann auszukommen, wenn eine Länge eines Stoffbahnstücks zwischen dem Detektor und der Abschneidekante erfaßbar und dem Rechnersystem als Korrekturgröße übermittelbar ist. In diesem Fall ist der erste Detektor selbst auch zum Erkennen des X-Wertes dieser Marke ausgebildet oder an der Stelle des ersten Detektors ist ein zweiter Detektor angeordnet, welcher lediglich zur Erkennung der X-Position der Marke bezüglich der auszulegenden Stofflage dient.

Eine Möglichkeit, die Länge des Stoffbahnstücks zwischen dem Detektor und der Abschneidekante erfaßbar zu machen, besteht darin, die Stoffvorgabe und das Legegerät so auszubilden, daß das Stoffbahnstück zwischen dem Detektor und der Auslegekante unabhängig von einer Höhenverstellung des Legeaggregats dieselbe Länge aufweist.

Eine andere Möglichkeit besteht darin, daß ein eine Höhenverstellung des Legeaggregats messender, mit dem Rechnersystem in Verbindung stehender Sensor vorgesehen ist, welcher die Verstellung des Legeaggregats erfaßt und als Korrekturgröße dem Rechnersystem übermittelt.

Bei einem besonders komfortablen Ausführungsbeispiel der erfindungsgemäßen Stofflegemaschine ist vorgesehen, daß eine Grobsteuerung der Legewagengeschwindigkeit durch Berücksichtigung der gespeicherten ungefähren X-Position der Marken erfolgt, wozu diese ungefähre X-Position der Marken bereits im Rahmen der Warenschau ermittelt und in den Datenspeicher des Rechnersystems eingegeben werden muß.

Für den Einsatz des erfindungsgemäßen Verfahrens und der erfindungsgemäßen Legemaschine wird vorzugsweise das Erfassen eines Fehlers in einer Stoffbahn im Rahmen eines Verfahrens der eingangs beschriebenen Art erfindungsgemäß so gelöst, daß als weitere Positionsangaben X- und Y-Werte einer eine Begrenzungslinie um den Fehler festlegenden Punktschar ermittelt und abgespeichert werden und daß für deren X- und Y-Werte die Marke bzw. eine Seitenkante der Stoffbahn als Bezugspunkt dienen.

Der Vorteil des erfindungsgemäßen Verfahrens ist also darin zu sehen, daß anstelle der bisher bekannten punktförmigen Ermittlung des Fehlers im Rahmen der Warenschau die Ermittlung einer Begrenzungslinie des Fehlers erfolgt, da durch die bisher durchgeführte punktförmige Ermittlung der Fehler in seiner Ausdehnung nicht erfaßt wird. Das erfindungsgemäße Verfahren ermittelt also somit nicht die Position des Fehlers selbst, die später für einen Schnittbildvergleich nicht ausreichend ist, sondern es ermittelt sofort die eigentlich für den Schnittbildvergleich relevante Ausdehnung des Fehlers durch die Bestimmung einer Begrenzungslinie. Dadurch, daß die Begrenzungslinie des Fehlers festgelegt wird, ist später beim Auslegen der Stoffbahn eindeutig klar, welcher Bereich der Stoffbahn nicht in einem späteren Zuschnitteil liegen darf und, wenn dies der Fall ist, welches Teil gegebenenfalls durch Überlappendlegen neu ausgelegt werden muß.

Damit ist durch das erfindungsgemäße Verfahren zum Erfassen eines Fehlers dieser für sämtliche weiteren Verfahrensschritte eindeutig und ausreichend definiert, so daß bei sämtlichen nachfolgenden Verfahrensschritten eine Inspektion des Fehlers unterbleiben kann und insbesondere die Möglichkeit besteht, diese nachfolgenden Verfahrensschritte automatisch durchführen zu können.

Ein weiterer Vorteil der erfindungsgemäßen Lösung ist darin zu sehen, daß durch die Festlegung der Begrenzungslinie um den Fehler in X-Richtung unter Bezugnahme auf die Position der Marke eine sehr große Genauigkeit beim Reproduzieren der Begrenzungslinie beim späteren Legen, vor allem bei verzugsempfindlichen Stoffen, erreichbar ist, da die Position der Marke, auf welche die die Begrenzungslinie festlegende Punktschar hinsichtlich ihrer X-Koordinate bezogen ist, auch bei einem starken Verzug der gesamten Stoffbahn beim Auslegen unverändert erhalten bleibt, so daß selbst ein starker Verzug der Stoffbahn nur unwesentliche Auswirkungen auf die reproduzierte Lage der Begrenzungslinie hat.

Um die Marke auf der Stoffbahn möglichst rationell setzen und später auch möglichst einfach detektieren zu können, hat es sich als vorteilhaft erwiesen, wenn die Marke auf dem Randbereich der Stoffbahn aufgebracht wird.

Im Rahmen des erfindungsgemäßen Verfahrens sind grundsätzlich zwei Möglichkeiten zum Aufbringen der Marken auf die Stoffbahn denkbar. Die erste Möglichkeit sieht vor, daß die Marken bei der Warenschau in kontinuierlichen Abständen auf der Stoffbahn gesetzt werden und dann die Begrenzungslinie eines möglicherweise auftretenden Fehlers in Relation zur letzten gesetzten Marke abgespeichert wird. Die zweite Möglichkeit des erfindungsgemäßen Verfahrens sieht vor, daß nur dann, wenn ein Fehler entdeckt wird, eine Marke gesetzt und die Begrenzungslinie dann in bezug auf diese Marke abgespeichert wird.

Während bei der ersten Möglichkeit des erfindungsgemäßen Verfahrens in der Regel prinzipiell ein Abstand zwischen der Marke und der Begrenzungslinie vorliegt, da die Positionen der in gleichen Abständen gesetzten Marken in der Regel nicht mit der X-Position der Fehler zusammenfallen, hat es sich auch bei der zweiten Möglichkeit des erfindungsgemäßen Verfahrens als vorteilhaft erwiesen, wenn die Marke gegenüber der Begrenzungslinie in X-Richtung im Abstand angeordnet wird.

Ein besonders bevorzugtes Ausführungsbeispiel bei beiden Möglichkeiten des erfindungsgemäßen Verfahrens sieht vor, daß die Marke, in Wickelrichtung gesehen, hinter der Begrenzungslinie angeordnet wird. Dies erleichtert zum einen den Verfahrensablauf bei der Warenschau, da zuerst die die Begrenzungslinie definierte Punktschar ermittelt werden kann und erst danach, in Wickelrichtung gesehen, also hinter der Begrenzungslinie die Marke aufgebracht werden muß. Ferner hat man beim späteren Legen, bei welchem die Stoffbahn in umgekehrter Richtung als bei der Warenschau abgewickelt wird, den Vorteil, daß zuerst die Marke erscheint und dann die zu dieser Marke gehörige und hinsichtlich ihrer X-Werte auf diese Marke bezogene Begrenzungslinie des Fehlers. Dies gibt außerdem beim Legen der Warenbahn die Möglichkeit, bereits bei Auftreten der Marke einen Bremsvorgang bei der Legemaschine einzuleiten und zusätzlich schon mit dem Schnittbildvergleich zu beginnen, so daß bereits bevor die Begrenzungslinie auf der auszulegenden Lage erscheint entschieden ist, ob und an welcher Stelle überlappend weitergelegt werden muß oder nicht.

Insbesondere bei der zweiten Möglichkeit des erfindungsgemäßen Verfahrens bietet es sich dann noch zusätzlich an, wenn die Marke und die Begrenzungslinie um eine einen Bremsweg einer Legemaschine entsprechende Strecke gegeneinander versetzt angeordnet sind, d.h. es besteht die Möglichkeit, bei der Bemessung des Abstandes zwischen der Begrenzungslinie und der Marke bereits den Bremsweg der Legemaschine zu berücksichtigen.

Bei den bisher beschriebenen Ausführungsbeispielen des erfindungsgemäßen Verfahrens wurde nicht im einzelnen festgelegt, wie die Bezeichnung der Marke erfolgen soll. Die einfachste Möglichkeit des erfindungsgemäßen Verfahrens sieht vor, daß die Bezeichnung der Marken entsprechend ihrer Reihenfolge durchgeführt wird, d.h. daß den Marken aufeinanderfolgende Nummern zugeordnet werden.

Diese Methode hat allerdings dann zur Folge, daß beim späteren Legen der Stoffbahn berücksichtigt werden muß, daß die Marken mit ihren Nummern in umgekehrter Reihenfolge auftreten.

Eine verbesserte Ausführungsform des erfindungsgemäßen Verfahrens sieht daher vor, daß die Marke zur Bezeichnung mit einem maschinenlesbaren Erkennungscode versehen wird. In diesem Fall müssen die Marken nicht zwangsläufig entsprechend ihrer Reihenfolge bezeichnet werden, sondern es besteht die Möglichkeit, willkürliche Bezeichnungen von Marke zu Marke zu wählen, da später durch Lesen des Erkennungscodes die jeweils zu dieser Marke abgelegten Positionsangaben wieder auffindbar sind. Des weiteren hat dieses verbesserte Ausführungsbeispiel den Vorteil, daß dann, wenn vor dem Legen eine der Marken abfällt, den weiteren Marken wiederum die richtige Begrenzungslinie zugeordnet wird, wohingegen dann, wenn die Marken lediglich nach ihrer Reihenfolge bezeichnet werden, beim Abfallen einer Marke der nächsten Marke die falsche Begrenzungslinie, nämlich die der abgefallenen Marke, zugeordnet wird.

Die codierten Marken können prinzipiell in unterschiedlicher Art und Weise lesbar sein. So wäre es beispielsweise im Rahmen der vorliegenden Erfindung möglich, daß die Marken induktiv ablesbar gekennzeichnet werden.

Eine noch einfachere Möglichkeit der Codierung der Marken sieht vor, daß die Marken optisch ablesbar gekennzeichnet werden.

Bei einer bevorzugten Form der Kennzeichnung werden die Marken mit mehreren in Längsrichtung der Stoffbahn aufeinanderfolgende optisch erkennbare Schichten versehen.

Als Erkennungscode wird vorzugsweise ein Balkencode aufgebracht. Dieser ist vorteilhafterweise von allen Richtungen lesbar, so daß das Abwickeln der Stoffbahn beim Legen in entgegengesetzter Richtung zur Wickelrichtung bei der Warenschau keine Probleme bereitet.

Eine weitere Ausführungsform, bei der sich das Ablegen der X/Y-Werte der die Begrenzungslinie definierenden Punktschar auf einem getrennten Datenspeicher erübrigt, sieht vor, daß die Daten der Begrenzungslinie auf der Marke maschinenlesbar vermerkt werden, so daß die Marke selbst gleichzeitig als Datenspeicher für die die Begrenzungslinie definierende Punktschar dient. In diesem Fall könnte auch ein Erkennungscode auf der Marke entfallen, da eine Fehlzuordnung der Begrenzungslinie zu der jeweiligen Marke ausgeschlossen ist.

Bei den bisher beschriebenen Ausführungsbeispielen des erfindungsgemäßen Verfahrens wurde nicht näher erläutert, wie der Bezugspunkt für die X-Werte der die Begrenzungslinie definierenden Punktschar gewählt werden soll. Im einfachsten Fall kann die Marke selbst als Bezugspunkt gewählt werden. Dies hat jedoch den Nachteil, daß die Ortsauflösung in X-Richtung durch die Größe der Marke begrenzt ist. Aus diesem Grund ist es vorteilhaft, wenn der Bezugspunkt auf der Marke maschinenlesbar aufgebracht wird, so daß durch Lesen des auf der Marke aufgebrachten Bezugspunktes eine wesentlich höhere Auflösung in X-Richtung erreichbar ist.

Des weiteren besteht die Gefahr, daß ein auf der Marke aufgebrachter Bezugspunkt, beispielsweise durch eine Verschiebung der Stoffbahn quer zu ihrer Längsrichtung nicht richtig identifiziert werden kann und beispielsweise mit dem Erkennungscode verwechselt wird. Aus diesem Grund ist es vorteilhaft, wenn der Bezugspunkt mit einem Identifizierungscode versehen wird, so daß keine Verwechslung mit dem Erkennungscode der Marke mehr möglich ist.

Die einfachste Möglichkeit der Festlegung des Bezugspunktes sieht vor, daß dieser durch eine quer zu einer Koordinatenrichtung verlaufende Bezugslinie definiert wird. Dabei kann dieser Bezugspunkt prinzipiell auch außerdem noch ein Bezugspunkt für die Koordinaten in Y-Richtung sein, was beispielsweise dann vorteilhaft ist, wenn eine Stoffbahn keine eindeutig definierte Seitenkante zeigt, so daß ein Bezug der Y-Koordinaten auf die Seitenkante bei dem jeweiligen X-Wert einen zu großen Fehler mit sich bringen würde und daher durch den Bezugspunkt nur an einer Stelle ein Bezug zur Seitenkante hergestellt wird

Wenn bei dem erfindungsgemäßen Verfahren zur Ermittlung der Y-Koordinate, definiert als Abstand von einer Seitenkante der Stoffbahn auf die Seitenkante Bezug genommen werden muß, so besteht das Problem, daß bei der Warenschau häufig die Stoffbahn schräg über die jeweilige Warenschaufläche gezogen wird, so daß ohne zusätzliche Maßnahmen keine genaue Festlegung der Lage der Seitenkante möglich ist.

Aus diesem Grund sieht eine Möglichkeit des erfindungsgemäßen Verfahrens vor, daß die Stoffbahn zur Warenschau kantengesteuert vorgelegt wird, so daß die Lage der Seitenkante der Stoffbahn eindeutig definiert ist.

Alternativ dazu ist es aber auch möglich und weniger aufwendig, wenn zu jeder Messung eines der Y-Werte unter Konstanthaltung des X-Werts die Lage der Seitenkante ermittelt und ausgehend von dieser der Y-Wert bestimmt wird. Das heißt also, daß die Lage der Seitenkante ohne Bedeutung ist, da zu jeder Messung eines Y-Wertes die jeweilige Lage der Seitenkante genau erfaßt wird. Bei dem vorstehend beschriebenen Verfahren der Bestimmung des Y-Wertes kann diese Bestimmung in unterschiedlicher Art und Weise durchgeführt werden. Eine erste Art der Bestimmung sieht vor, daß die Lage der Seitenkante bei dem jeweiligen X-Wert gemessen wird.

Diese Messung ist unter Umständen umständlich, so daß es vorteilhafter und in vielen Fällen hinsichtlich der erreichbaren Genauigkeit ausreichend ist, wenn die Lage der Seitenkante in Abwikkelrichtung gesehen, vor und hinter einem Warenschaubereich festgestellt und die dem jeweiligen X-Wert entsprechende Lage der Seitenkante durch Interpolation ermittelt wird.

Als wesentlicher Vorteil des bisher beschriebenen Verfahrens wurde die Tatsache angesehen, daß die Begrenzungslinie des Fehlers unter Bezugnahme auf die Marke erfaßt und abgespeichert wird, so daß ein Verzug der Warenbahn ohne nennenswerte Auswirkungen auf die spätere Reproduktion der Begrenzungslinie bleibt. Es hat sich jedoch zur Grobsteuerung des auf die Warenschau folgenden Legeverfahrens bei einem weiteren komfortableren Ausführungsbeispiel des erfindungsgemäßen Verfahrens als vorteilhaft erwiesen, wenn eine ungefähre X-Position der Marke im Abstand von einem Anfang der Stoffbahn erfaßt und abgespeichert wird. Dadurch wird die durch die Zuordnung der Begrenzungslinie zur jeweiligen Marke erreichte Genauigkeit nicht beeinträchtigt, es ist jedoch für eine optimale Steuerung des nachfolgenden Legeverfahrens von Vorteil, wenn bereits im voraus ermittelt werden kann, an welcher X-Position der Stoffbahn mit einer Marke und einem darauffolgenden Fehler zu rechnen ist.

Ferner wird zum Erfassen eines Fehlers im Rahmen einer Fehlerschau eine Warenschaumaschine der eingangs beschriebenen Art erfindungsgemäß so ausgebildet, daß die Registriereinrichtung eine vorzugsweise maschinengesteuerte Markensetzeinrichtung sowie ein in X- und Y-Richtung relativ zu der Stoffbahn verfahrbares Markierungselement zum Erfassen einer eine Begrenzungslinie des Fehlers festlegende Punktschar umfaßt, daß die mit dem Markierungselement angefahrenen X- und Y-Werte der Punktschar durch Wegaufnehmer in Abhängigkeit von einem durch die Marke definierten Bezugspunkt bzw. einer Seitenkante der Stoffbahn erfaßbar und auf die Eingabeeinrichtung übertragbar sind und daß die Rechnereinheit so aufgebaut ist, daß sie der Bezeichnung der Marke als weitere Positionsangaben die X- und Y-Werte der Punktschar der Begrenzungslinie zuordnet und abspeichert.

Der Vorteil der erfindungsgemäßen Warenschaumaschine ist darin zu sehen, daß die Erfassung des Fehlers dadurch, daß eine Bedienungsperson mit dem Markierungselement die Begrenzungslinie des Fehlers abfährt und die Warenschaumaschine automatisch die die Begrenzungslinie definierende Punktschar mit ihren X- und Y-Werten, bezogen auf die Marke bzw. eine Seitenkante der Stoffbahn, ermittelt und zusammen mit der Bezeichnung der Marke abspeichert, eine automatische Weiterverarbeitung der Stoffbahn unter Berücksichtigung des Fehlers möglich macht.

Bei der vorstehend beschriebenen Warenschaumaschine sind prinzipiell zwei Möglichkeiten der Aufnahme der Erstreckung der Begrenzungslinie relativ zu der Position der Marke in X-Richtung denkbar. Die erste Möglichkeit sieht vor, daß die Stoffbahn von einer Markenpositionierstellung aus in X-Richtung hin und her verfahrbar ist und daß der X-Wegaufnehmer die Bewegungen der Warenbahn erfaßt. Bei diesem Ausführungsbeispiel der Warenschaumaschine wird also das Markierungselement selbst relativ zu der Warenschaumaschine lediglich in Y-Richtung, d.h. quer zur Längsrichtung der Stoffbahn, bewegt, während eine Relativbewegung zwischen der Warenbahn und dem Markierungselement in X-Richtung durch Hin- und Herverfahren der Warenbahn in dieser Richtung erreichbar ist. Dieser Aufbau der Warenschaumaschine eignet sich besonders für solche Fälle, bei denen die Fehler eine wesentlich größere Erstreckung in X-Richtung als die Warenschaufläche aufweisen, da die Stoffbahn relativ zu dem Markierungselement über beliebige Strecken verfahren werden kann.

Die vorstehend beschriebene Ausbildung der Warenschaumaschine ist jedoch dann nachteilig, wenn die Stoffbahnen sehr verzugsempfindlich sind, da durch das ständige Hin- und Herfahren bei der Ermittlung der X-Werte der Begrenzungslinie die Stoffbahn verzogen wird, was als solches unerwünscht ist, und außerdem noch ein zusätzlicher Meßfehler, bedingt durch den Verzug, auftritt. Aus diesem Grund ist es insbesondere dann, wenn verzugsempfindliche Stoffbahnen einer Warenschau unterzogen werden sollen von Vorteil, wenn die Warenschaumaschine so ausgebildet ist, daß das Markierungselement bezüglich der Warenschaufläche von einer X-Ausgangsstellung aus in X-Richtung verfahrbar ist und der X-Wegaufnehmer die Bewegung des Markierungselements relativ zur Warenschaufläche erfaßt. Bei dieser Ausbildung ist also das Markierungselement selbst sowohl in X- als auch in Y-Richtung relativ zur Warenschaufläche bewegbar. Sollte sich bei einer derartigen Warenschaumaschine ein Fehler über die Erstreckung der Warenschaufläche in X-Richtung ausdehnen, so ist dieser Fehler durch zwei aufeinanderfolgende und sich überlappende Begrenzungslinien zu erfassen.

Bei den bisher beschriebenen Ausführungsbeispielen wurde nicht näher auf die Art der mechanischen Halterung des Markierungselements an der Warenschaumaschine eingegangen. So sieht beispielsweise ein Ausführungsbeispiel vor, daß das Markierungselement an einem Gelenkarm gehalten ist, so daß dann die Wegaufnehmer die Gelenkbewegungen dieses Gelenkarms erfassen und in Wegstrecken in die jeweilige Richtung transformieren müssen.

Eine einfachere konstruktive Lösung insbesondere des zweiten Ausführungsbeispiels der erfindungsgemäßen Warenschaumaschine sieht vor, daß das Markierungselement auf einem X-Schlittensystem gehalten ist. In Verbindung damit bietet es sich dann vorzugsweise an, daß das Markierungselement ebenfalls auf einem Y-Schlittensystem gehalten ist.

Wenn im Zusammenhang mit dem erfindungsgemäßen Verfahren gleichzeitig mit jeder Messung eines Y-Wertes auch die Position der Seitenkante der Stoffbahn zu diesem Y-Wert bei konstantem X-Wert ermittelt werden soll, würde eine konstruktive Möglichkeit darin bestehen, die Warenschaumaschine so auszubilden, daß mit dem Markierungselement sowohl die Lage der Seitenkante als auch der jeweilige Y-Wert bei konstantem X-Wert erfaßt werden kann. Um ein derartiges Hin- und Herfahren zwischen der Seitenkante und dem zu erfassenden X-Wert zu umgehen, ist bei einer bevorzugten Ausführungsform vorgesehen, daß eine der X-Position des Markierungselements entsprechend gehaltene Seitenkantenmeßeinrichtung vorgesehen ist, die automatisch die jeweilige Lage der Seitenkante ermittelt.

Wie bereits im Zusammenhang mit dem erfindungsgemäßen Verfahren beschrieben, ist es vorteilhaft, wenn die Marke relativ zu der Begrenzungslinie in Wickelrichtung gesehen hinter dieser angeordnet ist. Aus diesem Grund ist die Markensetzeinrichtung relativ zu dem Markierungselement entgegen der Wickelrichtung der Warenbahn versetzt angeordnet.

Bei einer fest an der Warenschaumaschine gehaltenen Markensetzeinrichtung treten jedoch dann Probleme auf, wenn die Stoffbahn der Warenschaufläche nicht seitenkantengesteuert zugeführt wird, da dann die Markensetzeinrichtung die Marken in unterschiedlichem Abstand von der Seitenkante der Stoffbahn setzt. Dies kann später beim Legen der Stoffbahn zu Schwierigkeiten führen, da keine genaue Position der Marken quer zur Längsrichtung mehr vorgegeben ist. Aus diesem Grund ist es vorteilhaft, wenn die Markensetzeinrichtung seitenkantengesteuert in Y-Richtung auf die Stoffbahn zustellbar ist, so daß die jeweilige Marke, bedingt durch die Seitenkantensteuerung, stets im selben Abstand von der Seitenkante gesetzt wird.

Wie bereits im Zusammenhang mit dem erfindungsgemäßen Verfahren erläutert, ist es vorteilhaft, wenn die Marke mit einem maschinenlesbaren Erkennungscode versehen ist.

Hierzu hat es sich als nützlich erwiesen, wenn die Markensetzeinrichtung mit einem Druckwerk zum Aufbringen des Erkennungscodes auf die Marke versehen ist, so daß die Marken nicht bereits von vornherein mit dem Erkennungscode bedruckt sein müssen.

Vorteilhafterweise handelt es sich bei dem Erkennungscode um einen Balkencode, so daß das Druckwerk einen Balkencode zu drucken hat, welcher zweckmäßigerweise in Wickelrichtung lesbar ist.

Ferner wurde ebenfalls bereits im Zusammenhang mit dem erfindungsgemäßen Verfahren erwähnt, daß es nützlich ist, wenn die Marke mit einem maschinenlesbaren Bezugspunkt versehen ist. Dieser Bezugspunkt ist im einfachsten Fall durch einen quer zur jeweiligen Koordinatenrichtung verlaufenden Balken definiert, dem sicherheitshalber noch ein bevorzugterweise ebenfalls als Balkencode ausgebildeter Identifizierungscode zugeordnet ist.

Im Zusammenhang mit dem erfindungsgemäßen Verfahren wurde bereits erwähnt, daß eine genaue Festlegung der Seitenkante der Stoffbahn notwendig ist, um den Fehler bei der Bestimmung des jeweiligen Y-Wertes möglichst gering zu halten. So ist es daher denkbar, die Warenbahn der Warenschaufläche kantengesteuert zuzuführen. Da dies jedoch konstruktiv sehr aufwendig ist, ist bei einem bevorzugten Ausführungsbeispiel vorgesehen, daß in einem oberen und in einem unteren Bereich der Warenschaufläche jeweils eine Seitenkantenmeßeinrichtung angeordnet ist, mit welcher die Lage der Seitenkante in dem oberen und unteren Bereich bestimmt und Zwischenwerte durch Interpolation ermittelt werden können.

Bei den Seitenkantenmeßeinrichtungen sind vielerlei Möglichkeiten denkbar, wie z.B. mechanische Fühler oder ähnliches. Bevorzugterweise handelt es sich jedoch bei den Seitenkantenmeßeinrichtungen um in Y-Richtung ausgerichtete Sensorreihen.

Weitere Merkmale und Vorteile der Erfindung sind Gegenstand der nachfolgenden Beschreibung sowie der zeichnerischen Darstellung einiger Ausführungsbeispiele. In der Zeichnung zeigen:

Fig. 1    eine perspektivische Darstellung eines ersten Ausführungsbeispiels einer erfindungsgemäßen Warenschaumaschine;

Fig. 2    einen Schnitt längs Linie 2-2 in Fig. 1;

Fig. 3    einen Ausschnitt längs Linie 3-3 in Fig. 1;

Fig. 4    einen Ausschnitt längs Linie 4-4 in Fig. 1;

Fig. 5    eine ausschnittsweise Darstellung eines zweiten Ausführungsbeispiels der erfindungsgemäßen Warenschaumaschine;

Fig. 6    eine schematische Darstellung einer ausgerollten Stoffbahn entsprechend den ersten vier Ausführungsbeispielen des erfindungsgemäßen Verfahrens;

Fig. 7    eine vergrößerte Darstellung einer Marke in Fig. 6;

Fig. 8    eine Darstellung ähnlich Fig. 6 entsprechend einem fünften Ausführungsbeispiel des erfindungsgemäßen Verfahrens;

Fig. 9    eine schematische Seitenansicht einer erfindungsgemäßen Stofflegemaschine;

Fig.10    eine Frontansicht der Stofflegemaschine in Fig. 9;

Fig.11    eine schematische Darstellung eines Verlaufs einer Stoffbahn in der Legemaschine gemäß Fig. 9 und 10.

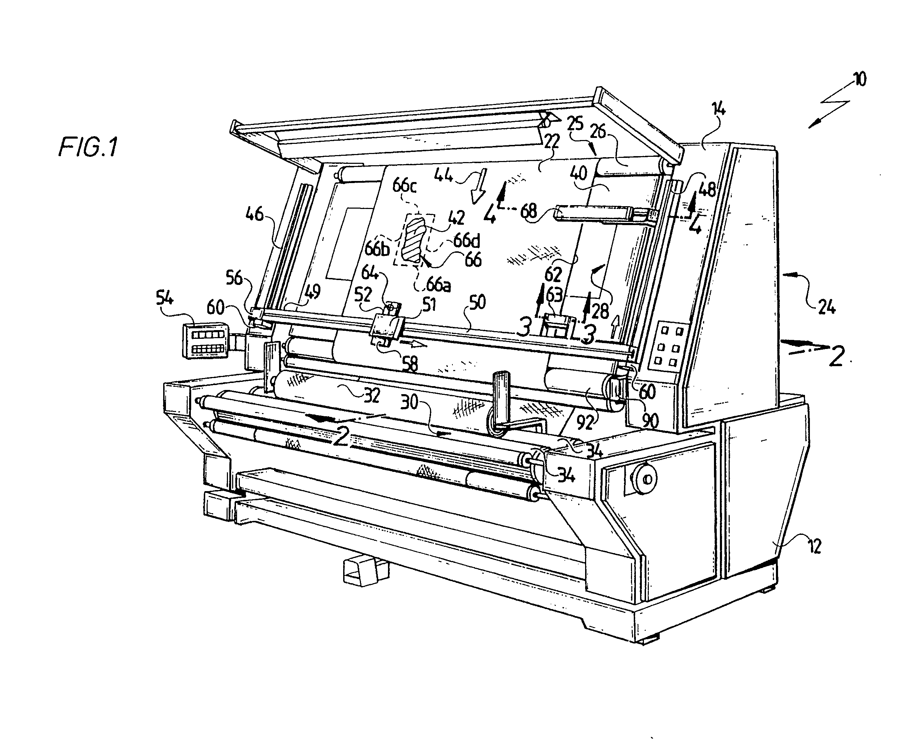

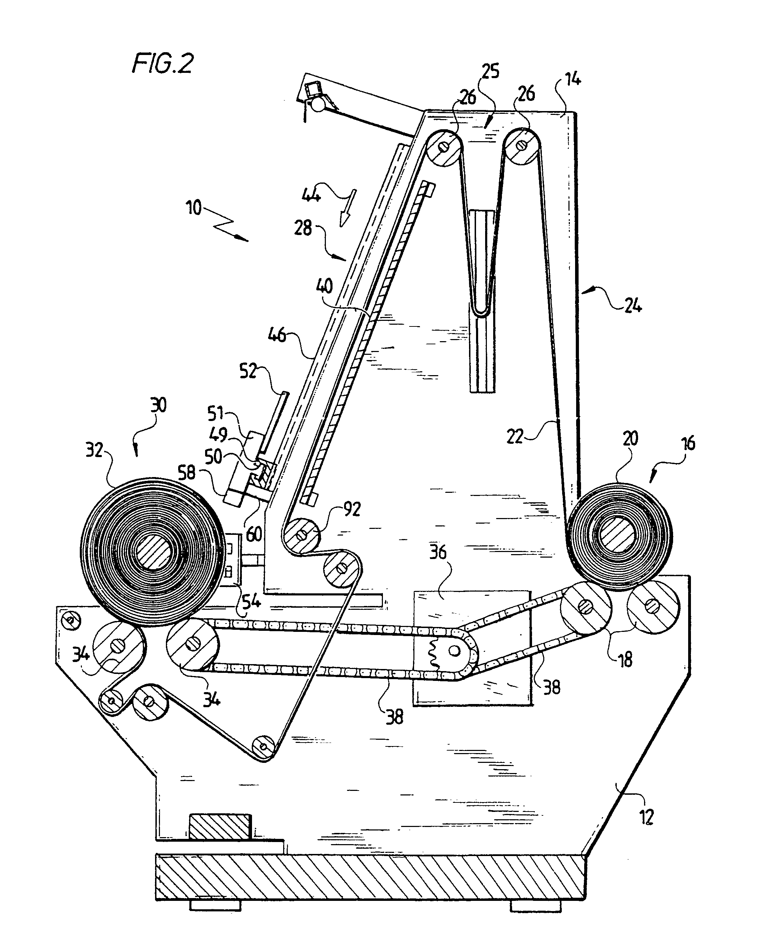

Fig. 1 und 2 zeigen ein als Ganzes mit 10 bezeichnetes erstes Ausführungsbeispiel einer erfindungsgemäßen Warenschaumaschine, welche ein Gestell 12 umfaßt, von welchem ausgehend sich mittig ein Warenschautisch 14 nach oben erhebt. Auf einer Rückseite 24 des Warenschautisches 14 ist eine Abwickeleinrichtung 16 vorgesehen, welche einen Satz Tragrollen 18 umfaßt, auf welchem eine abzuwickelnde Stoffrolle 20 aufliegt.

Von dieser Stoffrolle 20 ist eine Stoffbahn 22 auf der Rückseite 24 des Warenschautisches 14 nach oben und über eine Warenspannungsausgleichseinrichtung 25 mit zwei oberen Umlenkrollen 26 auf einer Vorderseite 28 des Warenschautisches 14 nach unten zu einer Aufwickeleinrichtung 30 gezogen.

Diese Aufwickeleinrichtung 30 umfaßt ebenfalls eine Stoffrolle 32, welche ihrerseits auf einem Satz Tragrollen 34 aufsitzt.

Getrieben werden die Abwickeleinrichtung 16 und die Aufwickeleinrichtung 30 von einem Antrieb 36, welcher beispielsweise über Ketten 38 die Tragrollensätze 18 und 34 antreibt.

Auf der Vorderseite 28 des Warenschautisches 14 liegt eine Warenschaufläche 40, auf welcher die Stoffbahn 22 nach Fehlern untersucht wird. Zur Registrierung eines auf dieser Warenschaufläche entdeckten Fehlers 42 ist eine Registriereinrichtung vorgesehen, welche beispielsweise zwei beiderseits der Warenschaufläche 40 angeordnete und sich parallel zu einer Abwickelrichtung 44 erstreckende X-Führungen 46 und 48, eine auf diesen X-Führungen 46 und 48 als X-Schlitten 49 verschiebbare Y-Führung 50 und einen auf dieser Y-Führung 50 quer zur Abwickelrichtung 44 und senkrecht zu den X-Führungen 46 und 48 verschieblichen Y-Schlitten 51 mit einem Markierungselement 52 sowie eine Rechnereinheit 54 mit Wegaufnehmern 56 und 58 umfaßt. Dabei dient beispielsweise der Wegaufnehmer 56, gehalten an dem X-Schlitten 49, als X-Wegaufnehmer, welcher die Verschiebungen der Y-Führung 50 in X-Richtung ausgehend von einer durch Anschläge 60 definierten Ausgangsstellung mißt, und der Wegaufnehmer 58, integriert in den Y-Schlitten 51, als Y-Wegaufnehmer, welcher die Stellung des Markierungselements 52 relativ zu einer rechten Seitenkante 62 der Stoffbahn 22 erfaßt. Durch die beiden Wegaufnehmer 56 und 58 ist in erfindungsgemäßer Weise eine Erfassung des Fehlerbereichs 42 dadurch möglich, daß ein Fadenkreuz 64 des Markierungselements 52 auf einer den Fehlerbereich 42 umgebenden Begrenzungslinie 66 beispielsweise von einer Bedienungsperson umfahren wird.

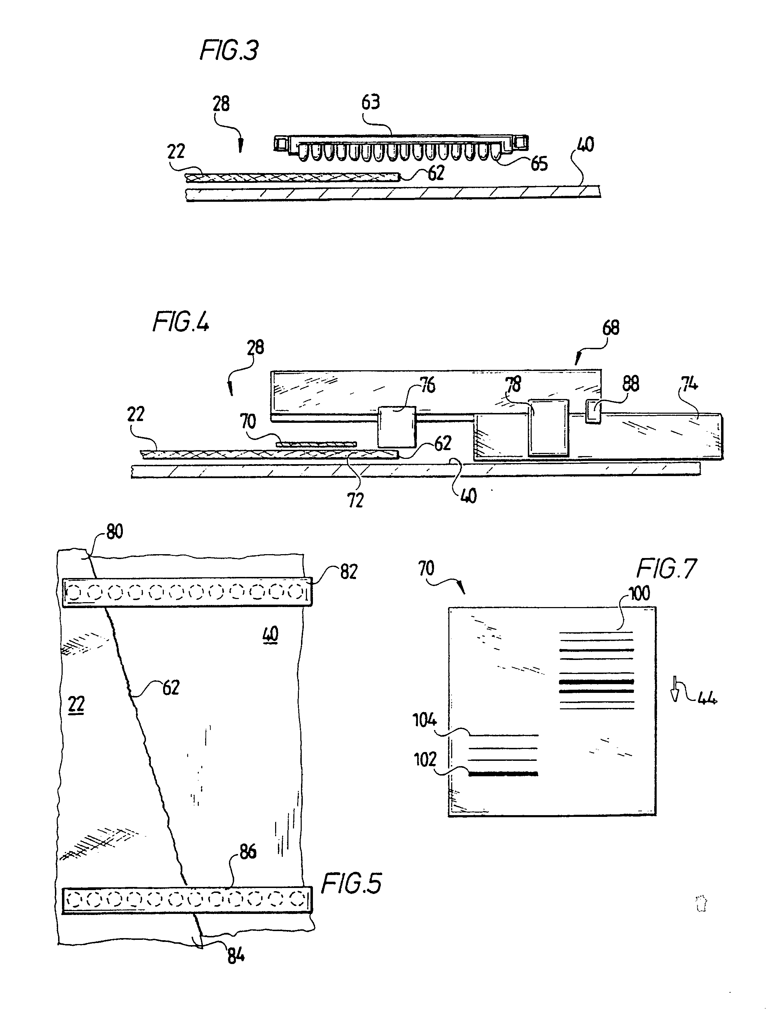

Zur genauen Erfassung des Y-Wertes, definiert als Abstand von der Seitenkante 62, ist am X-Schlitten, in dem die Seitenkante 62 übergreifenden Bereich und in derselben X-Position wie das Fadenkreuz 64, ein Seitenkantensensor 63 gehalten, welcher beispielsweise, wie in Fig. 3 dargestellt, in Y-Richtung aneinandergereihte Reflexionssensoren 65 umfaßt, die ihrerseits auf das unterschiedliche Reflexionsvermögen der Stoffbahn 22 und der Warenschaufläche 40 ansprechen.

An dem Warenschautisch 14 ist außerdem eine die Seitenkante 62 der Stoffbahn 22 übergreifende Markenklebeeinrichtung 68 vorgesehen, mit welcher - wie in Fig. 4 dargestellt - Marken 70 auf einen Randbereich 72 der Stoffbahn 22 klebbar sind. Erfindungsgemäß ist diese Markenklebeeinrichtung 68 auf einer Führung 74 in Y-Richtung verschieblich gelagert und mit einem Seitenkantendetektor 76 sowie einem Y-Vorschubantrieb 78 versehen, so daß die gesamte Markenklebeeinrichtung zum Aufkleben der Marken 70 auf den Randbereich relativ zur Seitenkante 62 in dieselbe Position bringbar ist und daher unabhängig vom Verlauf der Seitenkante 62 auf der Warenschaufläche 40 die Marken 70 stets im selben Abstand von der Seitenkante 62 plaziert.

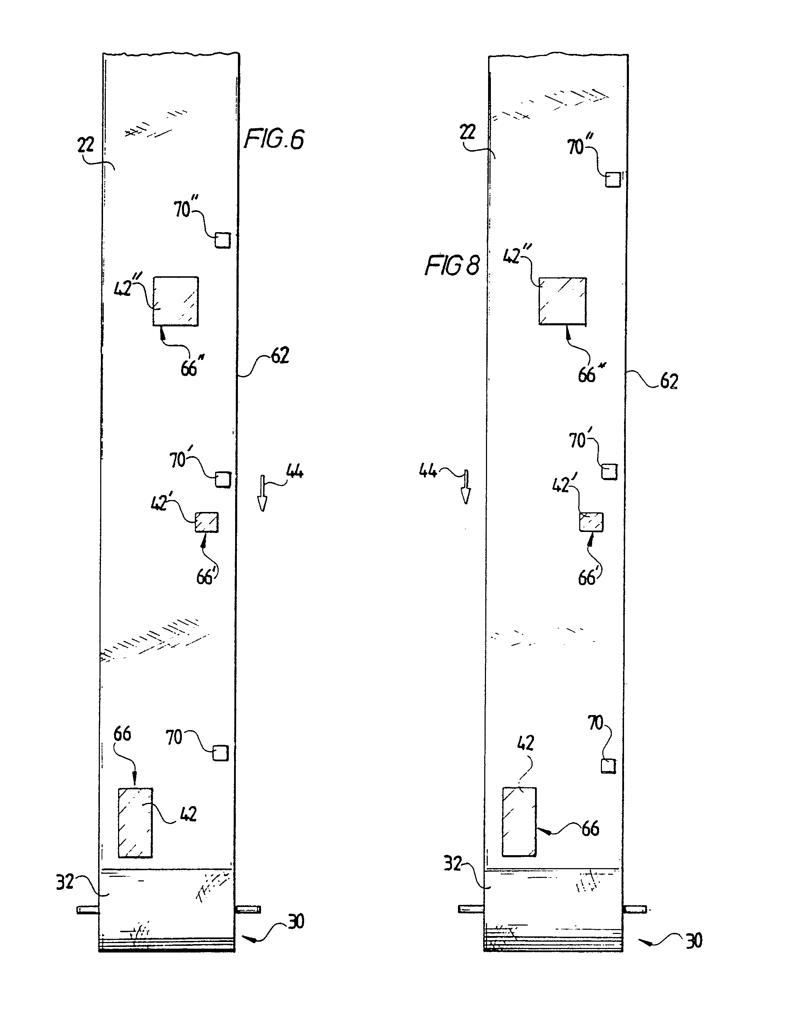

Bei einem zweiten Ausführungsbeispiel der Warenschaumaschine ist, um die Lage der Seitenkante 62 der Stoffbahn 22 auf der Warenschaufläche 40 genau zu erfassen, wie aus Fig. 5 erkennbar, anstelle des Seitenkantensensors 63 an einem oberen Ende 80 der Warenschaufläche 40 ein erster Seitenkantensensor 82 und an einem unteren Ende 84 der Warenschaufläche 40 ein zweiter Seitenkantensensor 86 vorgesehen. Der erste Kantensensor 82 und der zweite Kantensensor 86 sind außerdem noch dazu verwendbar, um eine kantengenaue Zufuhr der Stoffbahn 22 zur Warenschaufläche 40 bzw. zur Aufwickeleinrichtung 30 zu ermöglichen, wozu die Warenspannungsausgleichseinrichtung 25 bzw. die Aufwickeleinrichtung 30 quer zur Abwickelrichtung 44 verschiebbar auszubilden sind. Damit ist ferner ein exakter Kantenaufbau der Stoffrolle 32 erreichbar.

Ein drittes Ausführungsbeispiel der erfindungsgemäßen Warenschaumaschine geht aus von einem Aufbau gemäß dem zweiten Ausführungsbeispiel, allerdings ist der erste Seitenkantensensor 82 durch einen in der Führung 74 der Markenklebeeinrichtung eingebauten Wegmesser 88 - zusätzlich in Fig. 4 eingezeichnet - ersetzt, welcher jeweils den Weg mißt, um den die ebenfalls nahe des oberen Endes 80 der Warenschaufläche angeordnete Markenklebeeinrichtung 68 in Richtung auf die Seitenkante 62 verschoben wird, so daß der Verlauf der Seitenkante 62 aus diesem Weg in Verbindung mit dem unteren Seitenkantensensor ermittelt werden kann.

Bei einem vierten Ausführungsbeispiel der Warenschaumaschine 10 ist die Y-Führung 51 unverschieblich an dem Gestell 12 gehalten. Eine Relativverschiebung zwischen der Stoffbahn 22 und dem Markierungselement 52 in X-Richtung ist dadurch erreichbar, daß die Stoffbahn auf der Warenschaufläche 40 in Abwickelrichtung 44 und entgegengesetzt dazu durch den Antrieb 36 langsam zum Aufnehmen der Begrenzungslinie 66 verfahrbar ist. Als X-Wegaufnehmer kommt dann ein in Fig.1 dargestellter Stoffbahnlängenmesser 90, beispielsweise verbunden mit einer am unteren Ende der Warenschaufläche 40 angeordneten unteren Umlenkrolle 92, zum Einsatz.

Der Stoffbahnlängenmesser 90 kann auch bei dem ersten Ausführungsbeispiel dazu verwendet werden, die Länge der Stoffbahn 22 von deren Anfang ausgehend zu messen und zu jeder Marke 70 nach deren Lage relativ zum Anfang der Stoffbahn 22 in dem Datenspeicher des Rechners 54 abzulegen. Diese absolute Lage der Marken 70 ist zwar beim späteren Legen der Stoffbahn 22 nicht exakt reproduzierbar, da sich die Stoffbahn 22 in ihrer Längsrichtung unterschiedlich zieht, die Information über die Lage der Marken 70 kann jedoch bei einer besonderen Art der Steuerung einer Legemaschine, wie dies im folgenden noch näher erläutert werden wird, von Vorteil sein.

Ein erstes Ausführungsbeispiel des erfindungsgemäßen Verfahrens, illustriert in Fig. 6, funktioniert folgendermaßen:

Die über die Warenschaufläche 40 gezogene Stoffbahn 22 wird entweder von einer Bedienungsperson oder automatisch inspiziert. Stellt die Bedienungsperson oder die Automatik einen Fehler 42 fest, so wird das Abwickeln der Stoffbahn 22 gestoppt.

Der Stopp erfolgt zweckmäßigerweise dann, wenn bei in ihrer unteren Anschlagstellung stehender Y-Führung 50 die untere Begrenzungslinie 66a des Fehlerbereichs 42 nahe dem Fadenkreuz 64 des Markierungselements 52 zu liegen kommt.

Das Anhalten der Abwickelbewegung ist gleichzeitig für die Rechnereinheit 54 der Startbefehl, um zunächst mit der Markenklebeeinrichtung 68 die Marke 70 auf den Randbereich 72 der Stoffbahn 22 aufzukleben. Gleichzeitig beginnt die Bedienungsperson oder gegebenenfalls auch eine entsprechende Automatik mit dem Fadenkreuz 64 des Markierungselements 52 den Fehlerbereich 42 längs der Begrenzungslinie 66, mit den Abschnitten 66a, 66b, 66c und 66d zu umfahren. Die hierbei durchlaufenden Wegstrecken werden sowohl von dem X-Wegaufnehmer 56 als auch von dem Y-Wegaufnehmer 58 gemessen und in Form einer Punktschar mit entsprechenden X/Y-Wertepaaren der Rechnereinheit 54 übermittelt, die diese dann gemeinsam mit der Tatsache, daß auf der Stoffbahn 22 die erste Marke 70 gesetzt wurde, in ihrem Datenspeicher ablegt, wobei automatisch der Abstand der Markenklebeeinrichtung 68 von der Ausgangsstellung der Y-Führung 50 berücksichtigt wird. Somit sind nun im Datenspeicher der ersten Marke 70 sämtliche, die Begrenzungslinie 66 in Relation zur Marke 70 festlegenden Punkte in Form von X/Y-Wertepaaren abgelegt.

Nach Beendigung des Umfahrens der Begrenzungslinien 66 wird die Warenschau fortgesetzt, d.h. die Stoffbahn 22 wird weiter in Abwickelrichtung 44 über die Warenschaufläche 40 gezogen.

Tritt nun ein weiterer Fehler 42' auf, so wird jetzt eine zweite Marke 70' gesetzt, und in Abhängigkeit von dieser zweiten Marke werden sämtliche Daten der zu dem zweiten Fehlerbereich 42' gehörenden Begrenzungslinie 66' in gleicher Weise wie bereits beschrieben abgelegt.

Dasselbe Verfahren wird bei Auftreten eines dritten Fehlers 42'' durchgeführt, so daß nach Abwickeln der Stoffrolle 20 die Stoffrolle 32 eine Reihe von Marken 70, 70', 70'' usw., bezeichnet durch ihre Reihenfolge auf der Stoffbahn 22 als erste, zweite und dritte Marke, trägt, zu denen jeweils die Daten der Begrenzungslinien 66, 66', 66'' usw. in dem Datenspeicher der Rechnereinheit 54 abgelegt sind.

Das zweite Ausführungsbeispiel des erfindungsgemäßen Verfahrens entspricht dem ersten Ausführungsbeispiel insoweit, als zu den jeweiligen Marken 70, 70', 70'' usw. die jeweiligen Begrenzungslinien 66, 66', 66'' usw. in der Rechnereinheit 54 gespeichert werden. Es unterscheidet sich vom ersten Ausführungsbeispiel lediglich dadurch, daß zusätzlich zu der Reihenfolge der Marken 70, 70', 70'' noch deren ungefähre absolute Lage in dem Datenspeicher der Rechnereinheit 54 mitgespeichert wird.

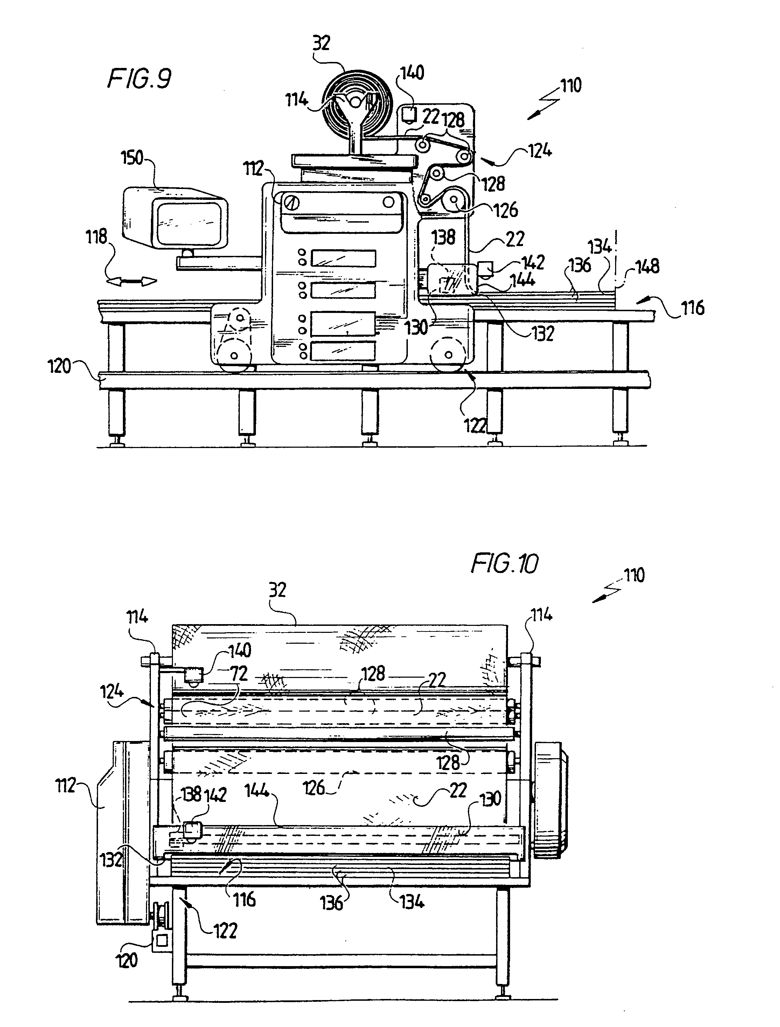

Bei einem dritten Ausführungsbeispiel des erfindungsgemäßen Verfahrens werden die Marken 70, 70', 70'' - wie in Fig. 7 dargestellt - zur Bezeichnung mit einem zusätzlichen Erkennungscode 100 versehen, was das Erkennen der Reihenfolge der Marken 70, 70', 70'' erleichtert und außerdem beim Legen dann, wenn beispielsweise eine der Marken abgefallen und verloren gegangen ist, eine falsche Anzeige von Begrenzungslinien 66, 66', 66'' usw. vermeiden hilft. Dieser Erkennungscode wird erfindungsgemäß von der Markenklebeeinrichtung 68 beim jeweiligen Aufkleben der Marken 70, 70', 70'' usw. auf diese aufgedruckt, wobei es sich im einfachsten Fall um einen Balkencode handelt.

Ferner können die Marken 70, 70', 70''. usw. außerdem noch mit einem Bezugspunkt versehen sein, welcher insgesamt eine höhere Ortsauflösung des erfindungsgemäßen Verfahrens dadurch erlaubt, daß nicht die Marken 70, 70', 70'' als Ganzes sowohl beim Registrieren der dazugehörigen Begrenzungslinien 66, 66', 66'' usw. einen Bezugspunkt darstellen und damit die Ortsauflösung in der Größenordnung der Größe der Marken 70, 70', 70'' usw. selbst liegt, sondern daß die Marken 70, 70', 70'' zusätzlich noch einen auf diese aufgebrachten Bezugspunkt zeigen. Dieser kann, wenn es sich lediglich wie bei den vorhergehenden Ausführungsbeispielen um einen Bezugspunkt in X-Richtung handelt, durch einen optisch erkennbaren Balken 102 definiert sein, der Bezugspunkt kann aber auch lediglich ein optisch erkennbarer Punkt sein, so daß er sowohl als Bezugspunkt in X-Richtung als auch in Y-Richtung dienen kann. Ferner hat es sich, um den Bezugspunkt eindeutig identifizieren zu können, als zweckmäßig erwiesen, wenn diesem ein Identifizierungscode 104 beispielsweise in Form von drei Balken in gleichem Abstand vorangestellt ist, wodurch beispielsweise beim späteren Detektieren der Marke eine Verwechslung mit dem Erkennungscode 100 vermieden werden kann.

Sowohl der Erkennungscode 100 als auch der Identifizierungscode 104 sind vorteilhafterweise in X-Richtung lesbar, also in Y-Richtung verlaufende Balken, wobei dessen Anfang entgegengesetzt zur Abwickelrichtung 44 angeordnet ist, so daß ein Umwickeln zum Legen vermieden werden kann.

Ein viertes Ausführungsbeispiel des erfindungsgemäßen Verfahrens unterscheidet sich lediglich hinsichtlich der Aufnahme der Erstreckung der Begrenzungslinie 66 in X-Richtung durch den Stoffbahnlängenmesser 90 anstelle des X-Wegaufnehmers 56 von den bisher beschriebenen Verfahren. Ansonsten sind alle bisher beschriebenen Verfahren mit dem vierten Ausführungsbeispiel identisch durchführbar.

Bei einem fünften Ausführungsbeispiel des erfindungsgemäßen Verfahrens - skizziert in Fig. 8 - werden in Abwandlung zu allen bisher beschriebenen Ausführungsbeispielen die Marken 70, 70', 70'' usw. nicht nur dann gesetzt, wenn die Stoffbahn 22 zur Erfassung der Begrenzungslinie 66a durch das Fadenkreuz 64 angehalten wird, sondern es werden während des gesamten Abwickelns der Stoffbahn in Abwickelrichtung 44 in jeweils konstanten Abständen, gesteuert durch den Stoffbahnlängenmesser 90, Marken 70, 70', 70'' auf den Randbereich 72 der Stoffbahn 22 aufgeklebt.

Die Rechnereinheit 54 hat somit in ihrem Datenspeicher beim Anhalten der Stoffbahn 22 zum Erfassen der unteren Begrenzungslinie 66a durch das Fadenkreuz 64 nicht wie bisher eine Marke 70 auf die Stoffbahn 22 aufzukleben, sondern den Abstand zwischen der bereits aufgeklebten oder der als nächstes aufzuklebenden Marke und der Begrenzungslinie 66a in X-Richtung, gemessen von dem Stoffbahnlängenmesser 90, in dem Datenspeicher abzulegen.

Im Anschluß daran erfolgt die Erfassung der Begrenzungslinie 66 genau wie bei den vorhergehenden Ausführungsbeispielen, so daß sich an den bereits abgelegten X-Wert dann die X/Y-Wertepaare der Begrenzungslinie 66 des jeweiligen Fehlers 42 anschließen.

Bei den bisher beschriebenen fünf Ausführungsbeispielen des erfindungsgemäßen Verfahrens wurde nicht näher auf die Bestimmung des jeweiligen Y-Wertes bei der Ermittlung der X/Y-Wertepaare der die Begrenzungslinie 66 definierenden Punktschar eingegangen.

Bei einer ersten Variante der vorstehend beschriebenen Ausführungsbeispiele erfolgt die Ermittlung des Y-Wertes über den Y-Wegaufnehmer 58 und den Seitenkantensensor 63. Der Seitenkantensensor 63 ermittelt die genaue Lage der Seitenkante 62 auf der Stoffbahn, so daß dann ausgehend von diesem Wert mittels des Y-Wegaufnehmers 58 der wahre Y-Wert ermittelt werden kann. Bei diesem Verfahren ist es somit völlig gleichgültig, ob die Stoffbahn 22 gerade oder schräg über die Warenschaufläche 40 gezogen wird.

Ein anderes Verfahren, dargestellt in Fig. 5, mißt über den ersten Seitenkantensensor 82 und den zweiten Seitenkantensensor 86 am oberen bzw. unteren Ende der Warenschaufläche 40 die Lage der Seitenkante 62. Die jeweilige Lage der Seitenkante 62 zu jedem zwischen dem ersten Seitenkantensensor 82 und dem zweiten Seitenkantensensor 86 wird durch ein Interpolationsverfahren ermittelt, welches eine Gerade durch die mit dem ersten und zweiten Seitenkantensensor 82, 86 gemessene Seitenkantenlage hindurch legt. Damit kann nun zu jedem vom Markierungselement 52 angefahrenen X-Wert auf der Begrenzungslinie 66 eine diesem entsprechende Lage der Seitenkante 62 zwischen dem ersten und zweiten Seitenkantensensor 82 bzw. 86 durch das Interpolationsprogramm ermittelt werden, und ausgehend von dieser ermittelten Lage der Seitenkante wird nun unter Heranziehung des vom Y-Wegaufnehmer 58 festgestellten Wertes der jeweilige Y-Wert errechnet.

Die Heranziehung der Tatsache, daß die Markenklebeeinrichtung 68 kantengesteuert in Richtung auf die Stoffbahn 22 verschiebbar ist und diese Verschiebung durch den Wegmesser 88 erfaßbar ist, erlaubt es, das vorstehend beschriebene Interpolationsverfahren auch dann durchzuführen, wenn der erste Seitenkantensensor 82 fehlt. Die von diesem zu ermittelnde Lage der Seitenkante wird durch den vom Wegmesser 88 ermittelten Weg ersetzt, so daß das Interpolationsverfahren in der vorstehend beschriebenen Weise durchgeführt werden kann.

Eine weitere Variante eines Verfahrens zur exakten Festlegung des Y-Werts sieht vor, daß die Stoffbahn 22 der Warenschaufläche 40 kantengesteuert zuführbar ist, wofür die Warenspannungsausgleichseinrichtung 25 quer zur Abwickelrichtung 44 verschiebbar ist. Im Falle einer derartigen kantengesteuerten Zuführung der Stoffbahn 22 ist ein schräger Verlauf der Stoffbahn 22 auf der Warenschaufläche 40 ausgeschlossen, so daß als Nullpunkt für die Bestimmung des jeweiligen Y-Wertes die Lage der Seitenkante 62, in welcher diese der Warenschaufläche 40 zugeführt wird, herangezogen werden kann.

Nach der Durchführung des erfindungsgemäßen Warenschauverfahrens auf einer erfindungsgemäßen Warenschaumaschine ist eine Stoffrolle 32 vorhanden, deren Stoffbahn 22, wie in den Fig. 6 und 8 aufgerollt dargestellt, die im Bereich ihrer Fehler 42, 42', 42'' usw. aufgeklebten Marken 70, 70', 70'' usw. trägt. Außerdem sind in dem Datenspeicher des Rechners 54 unter der Bezeichnung der jeweiligen Marken 70, 70', 70'' die X/Y-Wertepaare der die Begrenzungslinie 66 definierenden Punktschar abgelegt.

Zum Legen einer derartigen Stoffrolle 32 sind somit sämtliche in dem Datenspeicher des Rechners 54 enthaltenen Daten auf ein mit 112 bezeichnetes Rechnersystem einer als Ganzes mit 110 bezeichneten Legemaschine - dargestellt in den Fig. 9 und 10 - zu überspielen. Außerdem ist die Stoffrolle 32 in eine hierfür vorgesehene Aufnahme 114 der Legemaschine 110 einzusetzen.

Die Legemaschine 110 umfaßt ein an einem Legetisch 116 in horizontaler Richtung längs eines Pfeils 118 mittels eines zeichnerisch nicht dargestellten Motors auf Schienen 120 verfahrbares Legemaschinengestell 122.

Dieses Legemaschinengestell 122 trägt auf seiner Oberseite die bereits beschriebene Aufnahme 114 für die Stoffrolle 32 sowie eine als Ganzes mit 124 bezeichnete und unterhalb der Aufnahme 114 angeordnete Stoffvorgabe. Diese Stoffvorgabe umfaßt mehrere, die von der Stoffrolle 32 abgewickelte Stoffbahn 22 zu einer Vorgabewalze 126 führende Umlenkwalzen 128, welche ein zugfreies Abwickeln der Stoffbahn 22 von der Stoffrolle 32 gewährleisten.

Von der Vorgabewalze 126 fällt die Stoffbahn 22 in ein höhenverstellbar am Legewagengestell 122 gehaltenes Legeaggregat 130, welches mit einer vorderen Auslegekante 132 die Stoffbahn 22 auf dem Legetisch 116 zu einem Lagenpaket 134 auslegt. Da das Lagenpaket 134 aus exakt übereinanderliegenden Einzellagen 136 aufgebaut sein soll und zur Fehlerbehandlung ebenfalls ein Abschneiden der Stoffbahn 22 erforderlich ist, ist außerdem in dem Legeaggregat 130 noch eine Abschneideeinrichtung 138 integriert.

Unmittelbar nach der Stoffrolle 32 ist ein die zu den Umlenkwalzen geführte Stoffbahn 22 in dem Randbereich 72 übergreifender erster Detektor 140 vorgesehen, welcher zum Erkennen und gegebenenfalls zum Lesen von den auf der Stoffbahn aufgebrachten Marken 70 dient. Ferner ist am Legeaggregat 130 ein zweiter Detektor 142 auf dessen vom Legewagengestell 122 wegweisender Frontfläche 144 gehalten, welcher zum Nachweis von unmittelbar nach der Auslegekante 132 in der obersten Lage 136 ausgelegten Marken 70 vorgesehen ist.

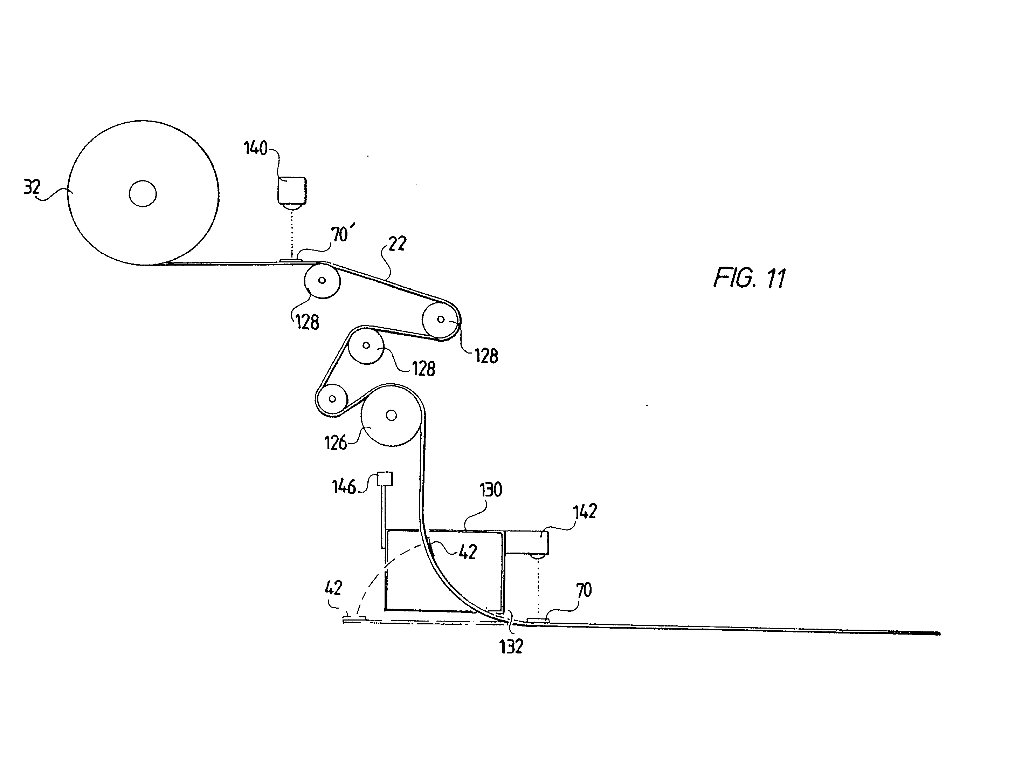

Die Anordnung der Detektoren 140 und 142 ist in Fig.11 in bezug auf die durch die Legemaschine geführte Stoffbahn 22 nochmals vergrößert skizziert.

In Abwandlung des beschriebenen ersten Ausführungsbeispiels der erfindungsgemäßen Legemaschine kann bei einem zweiten Ausführungsbeispiel der zweite Detektor 142 entfallen. In diesem Fall ist allerdings sicherzustellen, daß ein Weg der Stoffbahn vom ersten Detektor 140 bis zur Auslegekante 132 für das Rechnersystem 112 definiert erfaßbar ist, insbesondere bei einer Höhenverstellung des Legeaggregats 130 beim Auslegen des Lagenpakets 134. Das heißt, daß beispielsweise der Weg der Stoffbahn 22 vom ersten Detektor 140 bis zur Auslegekante 132 unabhängig von der Höhenverstellung des Legeaggregats 130 konstant gehalten wird, wozu bei einer Höhenverstellung des Legeaggregats 130 die Umlenkwalzen 128 entsprechend der Höhenverstellung des Legeaggregats 130 derart verstellbar auszubilden sind, daß eine Änderung eines Abstandes zwischen der Vorgabewalze 126 und der Auslegekante 132 durch eine Änderung eines Abstandes zwischen den Umlenkwalzen 128 kompensiert wird. Es ist aber auch möglich, die Umlenkwalzen 128 konstant stehen zu lassen und die Änderung des Abstandes zwischen der Vorgabewalze 126 und der Auslegekante 132 dadurch zu erfassen, daß dem höhenverstellbaren Legeaggregat 130 ein Wegmesser 146 zugeordnet ist, welcher die Abstandsänderungen erfaßt und dem Rechnersystem 112 übermittelt.

Ein erstes Ausführungsbeispiel des erfindungsgemäßen Legeverfahrens arbeitet folgendermaßen: Beim Abrollen der Stoffbahn 22 von der Stoffrolle 23 werden die Marken 70, 70', 7o'' usw., wie aus den Fig. 6 und 8 zu entnehmen ist, nun in umgekehrter Reihenfolge den Detektor 140 passieren. Das heißt, die letzte auf die Stoffbahn aufgebrachte Marke wird nunmehr die erste sein.

Das Rechnersystem 112 hat dies bei der Zuordnung der X/Y-Wertepaare der die Begrenzungslinie 66 definierenden Punktschar zu berücksichtigen.

Passiert beispielsweise die Marke 70'' den ersten Detektor 140, so übermittelt dieser das Signal, daß eine Marke nachgewiesen ist, dem Rechnersystem 112. Dieses ermittelt nun unter Berücksichtigung der bereits vom Detektor 140 nachgewiesenen Marken, um die wievielte Marke es sich handelt und greift auf den unter der Reihenfolge dieser Marke abgelegten Satz von X/Y-Wertepaaren der Punktschar im Datenspeicher zu.

Außerdem leitet der Rechner einen Bremsvorgang ein, bei welchem die Legegeschwindigkeit und somit auch die Geschwindigkeit der Stoffbahn 22 beim Durchlaufen der Legemaschine 110 reduziert wird. Da der ungefähre Abstand zwischen dem ersten Detektor 140 und der Auslegekante 132 bekannt ist, kann der Bremsvorgang beispielsweise durch eine bereits festliegende Bremsroutine derart gesteuert werden, daß dann, wenn die Marke 70'' nach Durchlaufen der Legemaschine 110 die Auslegekante 32 passiert, sich die Legegeschwindigkeit dem Wert 0 nähert.

Sobald die Marke 70'' die Auslegekante 132 passiert hat, wird sie vom zweiten Detektor 142 erkannt, so daß in diesem Moment die genaue X-Position der Marke 70'' in bezug auf einen Anfang 148 der obersten Lage 136 des Lagenstapels 134 vom Rechnersystem 112 ermittelt werden kann.

Nach Ermittlung dieser X-Position wird unter Heranziehung der X/Y-Wertepaare der zu dieser Marke 70" gehörenden Punktschar die genaue Lage der Begrenzungslinie 66" auf der obersten Lage 136 ermittelt und mit dem ebenfalls im Rechnersystem 112 bereits abgespeicherten Schnittbild verglichen. Dieser Schnittbildvergleich kann beispielsweise auf einem Terminal 150 dargestellt werden. Es ist aber ebenfalls möglich, daß dieser Schnittbildvergleich lediglich intern ohne Anzeige für die Bedienungsperson rechnerisch durchgeführt wird.

In Abhängigkeit von dem Resultat dieses Schnittbildvergleichs, d.h. davon, ob die Begrenzungslinie 66" eines oder mehrere der auszuschneidenden Teile des Schnittbildes tangiert, kann nun entweder eine Bedienungsperson bei Betrachtung des Terminals 150 oder das Rechnersystem 112 selbständig ermitteln, bis zu welcher Stelle weitergelegt, die Stoffbahn mit der Abschneidevorrichtung 138 abgeschnitten und an welcher Stelle die Stoffbahn neu angelegt wird. Eine Möglichkeit zur Ermittlung einer Stopp- und Abschneide-, sowie einer Neuanlegelinie ist in der deutschen Patentanmeldung P 37 13 010.2 dargestellt, auf welche diesbezüglich vollinhaltlich Bezug genommen wird.

Bei diesem Ausführungsbeispiel ist zu erkennen, daß es vorteilhaft ist, wenn die jeweilige Marke 70 bei der Warenschau in einer Richtung entgegengesetzt zur Abwickelrichtung 44 bei der Warenschau im Abstand von der Begrenzungslinie 66 plaziert wird. Durch diesen Abstand zwischen der jeweiligen Marke 70 und der Begrenzungslinie 66 liegt dann, wenn die Marke 70 vom zweiten Detektor 142 detektiert wird, der Fehler noch nicht in der obersten ausgelegten Lage 136, sondern befindet sich noch in dem durch die Legemaschine 110 geführten Stück der Stoffbahn 22, so daß die Bedienungsperson oder das Rechnersystem 112 noch rechtzeitig eine Entscheidung hinsichtlich der weiteren Vorgehensweise treffen kann, ohne daß gegebenenfalls mit der gesamten Legemaschine 110 entgegengesetzt zur Legerichtung zurückgefahren und der bereits ausgelegte Teil der Stoffbahn 22 wieder abgehoben und in die Legemaschine 110 zurückgewickelt werden muß.

Bei einem zweiten verbesserten Ausführungsbeispiel des erfindungsgemäßen Legeverfahrens kommt der Erkennungscode 100 auf der Marke 70 zum Einsatz. Hierbei dient der Detektor 140 nicht nur zum Erkennen der Tatsache, daß beispielsweise die Marke 70 diesen passiert hat, sondern auch zum gleichzeitigen Ablesen des Erkennungscodes 100.

Dadurch wird das Rechnersystem 112 mit Sicherheit in die Lage versetzt, die dieser Marke 70 entsprechenden Y/Y-Wertepaare der die Begrenzungslinie 66 definierten Punktschar aufzufinden. Dies ist insbesondere dann von Vorteil, wenn sich eine der Marke 70, 70', 70" usw. vor deren Detektieren mittels des ersten Detektors 140 gelöst hat. In diesem Fall wird zwar der der gelösten Marke entsprechende Fehler nicht erkannt und beim Legen nicht berücksichtigt. Es ist jedoch sichergestellt, daß den darauffolgenden Marken die richtigen Fehler mit den richtigen Begrenzungslinien wieder zugeordnet werden, während dies bei einem fehlenden Erkennungscode nicht der Fall ist.

Ein drittes Ausführungsbeispiel des erfindungsgemäßen Legeverfahrens sieht vor, daß der zweite Detektor 142 nicht nur die Tatsache des Auslegens der Marke 70 detektiert, sondern auf dieser Marke zunächst nochmals über ein Lesen des Identifizierungscodes 104 feststellt, daß der richtige Bereich der Marke 70 gelesen wird und der dann bei Erscheinen des durch den Balken 102 definierten Bezugspunktes exakt den diesem Bezugspunkt entsprechenden X-Wert vom Anfang 148 der oberen Lage 136 übermittelt. Das weitere Verfahren läuft analog zum ersten Ausführungsbeispiel ab.

Bei einem vierten Ausführungsbeispiel des erfindungsgemäßen Verfahrens kann auf den zweiten Detektor 142 verzichtet werden. In diesem Fall dient der erste Detektor 140 sowohl zum Erkennen der Marke 70 als solche und somit zum Einleiten des Bremsvorgangs, desgleichen ist der erste Detektor 140 in der Lage, gegebenenfalls den Erkennungscode 100 abzulesen und schließlich ist der erste Detektor 140 noch in der Lage, beispielsweise in bezug auf den letzten Balken des Erkennungscodes 100 die spätere X-Position dieser Marke 70 auf der ausgelegten obersten Lage 136 zusammen mit dem Rechnersystem 112 dadurch zu ermitteln, daß zu der Position dieser Marke 70 oder des letzten Balkens des Erkennungscodes 100 die Distanz zwischen der Position des ersten Detektors 140 und der Auslegekante 132, die bei diesem Verfahren für das Rechnersystem erfaßbar sein muß, hinzuaddiert wird. Um diese hinzuaddierte Distanz wird der Legevorgang fortgesetzt. Gleichzeitig erfolgt das Auslesen der X/Y-Wertepaare der dieser Marke entsprechenden, die Begrenzungslinie 66 dieser Marke definierenden Punktschar und der Schnittbildvergleich, so daß dann, wenn - wie rechnerisch ermittelt - die Marke 70 die Auslegekante 32 passiert hat, entweder der Legevorgang gestoppt wird, um der Bedienungsperson mittels des Terminals 150 Zeit zum Treffen der richtigen Entscheidung zu geben, oder bei rechnerischem Schnittbildvergleich, unter Zugrundelegung der vom Rechnersystem 112 bereits getroffenen Entscheidung hinsichtlich der weiteren Vorgehensweise, der Legevorgang fortgeführt wird.

Schließlich ist noch zu erwähnen, daß dann, wenn bei der Warenschau die Marken 70, 70', 70" usw. in gleichen Abständen gesetzt und die X/Y-Wertepaare der die Begrenzungslinie 66 definierenden Punktschar auf die bereits gesetzte Marke bezogen werden, beim Legen eine Umrechnung der X-Werte erforderlich ist, da die X-Werte der nach einer detektierten Marke 70" folgenden Begrenzungslinie 66' auf die auf diese detektierte Marke 70" folgende Marke 70' bezogen sind. Die Umrechnung ist dadurch möglich, daß der Abstand zwischen den bereits detektierten Marken 70''', 70" beim Legen gemessen werden kann und dieser Abstand dann zu den X-Werten der auf die detektierte Marke 70" folgende Marke 70' abgelegten Werten hinzuaddiert wird.

Wenn die Marken 70, 70', 70" usw. bei der Warenschau in konstanten Abständen gesetzt werden, so gibt dies erfindungsgemäß beim Legen - insbesondere bei verzugsempfindlichen Stoffen - die Möglichkeit, den Verzug beim Legen relativ zu dem bei der Warenschau durch die Messung der Abstände der Marken 70", 70', 70 festzustellen und gegebenenfalls durch Steuerung der Stoffvorgabe 124 über das Rechnersystem 112 zu regeln. Ferner besteht auch noch zusätzlich die Möglichkeit, die X-Werte der Begrenzungslinie entsprechend dem gemessenen Verzug zu korrigieren.

## Patentansprüche

1. Verfahren zum Legen einer mit Marken (70) gekennzeichnete Fehler (42) aufweisenden Stoffbahn (22), bei welchem die jeweilige Marke (70) durch ihre Bezeichnung erkannt, der dieser zukommende X-Wert in der ausgelegten Lage (136) ermittelt und mindestens eine zu dieser Marke (70) gespeicherte Positionsangabe einem Rechner (112) zum Schnittbildvergleich zugeleitet wird,
**dadurch gekennzeichnet,**
daß nach dem Erkennen der Marke (70) dem Rechner (112) zu dem ermittelten X-Wert als weitere Positionsangaben auf die Marke (70) und die Seitenkante (62) bezogene X- bzw. Y-Werte einer eine Begrenzungslinie (66) des Fehlers (42) definierenden Punktschar übermittelt werden und daß aufgrund dieser Werte die Position der Begrenzungslinie (66) in der ausgelegten Lage (136) festgestellt und anschließend der Vergleich mit dem Schnittbild durchgeführt wird.

2. Verfahren nach Anspruch 1, dadurch gekennzeichnet, daß zur Ermittlung des X-Wertes der Marke (70) diese dann detektiert wird, wenn sie in der ausgelegten Stofflage (136) erkennbar ist.

3. Verfahren nach Anspruch 1 oder 2, dadurch gekennzeichnet, daß zur Ermittlung des X-Wertes der Marke (70) diese auf der Stoffbahn (22) zwischen einer Stoffrolle (32) und einer Auslegekante (132) detektiert und eine Länge eines zwischen dem Detektieren der Marke (70) und der Auslegekante (132) liegenden Stücks der Stoffbahn (22) festgestellt und jeweils bei der Ermittlung des X-Wertes berücksichtigt wird.

4. Verfahren nach einem der Ansprüche 1 bis 3, dadurch gekennzeichnet, daß nach dem Detektieren der Marke (70) ein Bremsvorgang eingeleitet wird.

5. Verfahren nach einem der voranstehenden Ansprüche, dadurch gekennzeichnet, daß das Erkennen der Marke vor der Erfassung der Marke als Bezugspunkt in X-Richtung erfolgt.

6. Stofflegemaschine für eine mit Marken gekennzeichnete Fehler aufweisende Stoffbahn, insbesondere zur Durchführung des Verfahrens gemäß den Ansprüchen 1 bis 5 mit einer Stoffvorgabe (124), mit einem eine Auslegekante (132) aufweisenden Legeaggregat (130), mit einem Detektor (140, 142) für die Marken (70) und mit einer Steuerung, umfassend ein Rechnersystem (112), welches so strukturiert ist, daß es die Marken (70) aufgrund ihrer Bezeichnung erkennt und den der jeweiligen Marke (70) entsprechenden X-Wert in der auszulegenden Lage (136) ermittelt sowie aufgrund mindestens einer weiteren zu dieser Marke (70) in einem Datenspeicher abgelegten Positionsangabe einen Schnittbildvergleich durchführt, dadurch gekennzeichnet, daß das Rechnersystem (112) einen Datenspeicher für auf die Marke (70) und die Seitenkante (62) bezogene X- bzw. Y-Werte einer eine Begrenzungslinie (66) des Fehlers (42) definierende Punktschar aufweist und so strukturiert ist, daß zu dem X-Wert der Marke (70) in der auszulegenden Lage (136) als weitere Positionsangaben die X- und Y-Werte der Punktschar zur Ermittlung der Position der Begrenzungslinie (66) in der auszulegenden Lage (136) zur Durchführung des Schnittbildvergleichs herangezogen werden.

7. Stofflegemaschine nach Anspruch 6, dadurch gekennzeichnet, daß ein erster Detektor (140) zum Erkennen der Marke (70) im Bereich der Stoffvorgabe (124) angeordnet ist.

8. Stofflegemaschine nach Anspruch 6 oder 7, dadurch gekennzeichnet, daß ein zweiter Detektor (142) im Bereich der Auslegekante (132) angeordnet ist.

9. Stofflegemaschine nach einem der Ansprüche 6 oder 7, dadurch gekennzeichnet, daß eine Länge eines Stoffbahnstücks (22) zwischen dem ersten Detektor (142) und der Abschneidekante (132) erfaßbar und dem Rechnersystem (112) als Korrekturgröße übermittelbar ist.

10. Stofflegemaschine nach Anspruch 9, dadurch gekennzeichnet, daß die Stoffvorgabe (124) und das Legeaggregat (130) so ausgebildet sind, daß das Stoffbahnstück (22) zwischen dem ersten Detektor (140) und der Auslegekante (132) unabhängig von einer Höhenverstellung des Legeaggregats (130) dieselbe Länge aufweist.

11. Stofflegemaschine nach Anspruch 10, dadurch gekennzeichnet, daß ein eine Höhenverstellung des Legeaggregats (130) messender und mit dem Rechnersystem (112) in Verbindung stehender Sensor (146) vorgesehen ist.

FIG.1

EP 0 460 712 A2

FIG.2

*FIG.3*

*FIG.4*

*FIG.5*

*FIG.7*

FIG.6

FIG 8

FIG.9

FIG.10

FIG. 11